Europäisches Patentamt

European Patent Office

Office européen des brevets

(11) Numéro de publication: **0 343 056**
**A1**

## DEMANDE DE BREVET EUROPEEN

(21) Numéro de dépôt: **89401338.2**

(22) Date de dépôt: **12.05.89**

(51) Int. Cl.⁴: **H 02 J 7/10**

(30) Priorité: **16.05.88 FR 8806550**

(43) Date de publication de la demande:
**23.11.89 Bulletin 89/47**

(84) Etats contractants désignés:
**BE CH DE ES FR GB IT LI LU NL**

(71) Demandeur: **AGLO S.A.**
**40, rue Carnot**
**F-92150 Suresnes (FR)**

(72) Inventeur: **Veistroffer, René**
**188, rue d Courbevoie**
**F-92000 Nanterre (FR)**

**Boheil, Jean-Pierre**
**2, Squae de la Baume**
**F-78150 Rocquencourt (FR)**

(74) Mandataire: **Picard, Jean-Claude Georges et al**
**Cabinet Plasseraud 84, rue d'Amsterdam**
**F-75009 Paris (FR)**

(54) **Chargeur automatique pour batteries ou accumulateurs.**

(57) Il s'agit d'un chargeur (1) automatique d'au moins une batterie (2a, 2b, 2c, 2d) amovible, comprenant un bloc (3) d'alimentation en électricité à partir du réseau et au moins un module de changement de batterie (4a, 4b, 4c, 4d). Il comporte un rail de liaison électrique et de fixation sur lequel sont connectés et fixés rigidement, de façon amovible, le bloc (3) d'alimentation et le module de chargement (4a, 4b, 4c, 4d), et des moyens de commande automatique de l'enclenchement et de l'arrêt de la charge comprenant des moyens (36) de mesure analogique de la tension aux bornes de la batterie et des moyens (34, 37) de coupure de l'alimentation en électricité de ladite batterie lorsque la tension mesurée aux bornes de ladite batterie devient décroissante. Les batteries défectueuses peuvent également être détectées par ce chargeur.

FIG. 3.

EP 0 343 056 A1

## Description

## Chargeur automatique pour batteries ou accumulateurs

La présente invention concerne les chargeurs automatiques d'au moins une batterie ou accumulateur amovible, du type comprenant un bloc d'alimentation en électricité à partir du réseau et au moins un module de chargement d'une ou plusieurs batteries, ledit module comportant des moyens de régulation agencés pour délivrer une intensité constante de charge à chaque batterie, des moyens de détection de la présence de la ou des batteries placées dans le module, et des moyens de commande automatique de l'enclenchement et de l'arrêt de la charge de chaque batterie. Elle trouve une application particulièrement importante, bien que non exclusive, dans le domaine du chargement des batteries ou accumulateurs de faible volume, 6 V à 24 V ou plus, au cadmium nickel, et demandant un temps de charge compris par exemple entre 1 et 7 heures.

On connaît déjà des chargeurs de batteries du type ci-dessus défini. Il existe, en effet, des chargeurs de batterie, par exemple pour une ou plusieurs paires d'émetteurs-récepteurs radio-électriques, permettant l'enclenchement et l'arrêt automatiques du chargement des batteries qui sont connectées aux chargeurs.

Ces chargeurs présentent des inconvénients. Ils ne permettent pas, par exemple, d'éviter la surcharge desdites batteries, ce qui entraîne, à terme, leur usure ou leur détérioration. Les moyens d'arrêt automatique du chargement sont en effet déclenchés, soit par un thermo-couple lorsque, du fait d'une surcharge, la batterie se met à chauffer, notamment dans le cas d'une charge rapide, soit par une temporisation après un temps déterminé de chargement, quel que soit l'état de charge initial de la batterie, ce qui ne peut donc éviter des surcharges. En régime de charge rapide, il est également connu de mettre en oeuvre une tension de référence de coupure par batterie, coupant la charge avant que la tension aux bornes de la batterie atteigne sa valeur de pic. Cette procédure a cependant pour inconvénient que les batteries ne sont pas chargées au maximum lorsque la tension de coupure est atteinte.

La présente invention vise à fournir un chargeur automatique d'au moins une batterie ou accumulateur du type décrit ci-dessus, répondant mieux que ceux antérieurement connus aux exigences de la pratique, notamment tel qu'il permette la charge automatique de batteries sans risque de surcharge, et ce quel que soit l'état de charge initial des batteries, et qu'il permette la charge de plusieurs batteries, de volume, de capacité et de tension différents avec le même bloc d'alimentation.

Dans ce but, l'invention propose notamment un chargeur automatique d'au moins une batterie du type ci-dessus défini, caractérisé en ce que lesdits moyens de commande automatique de l'enclenchement et de l'arrêt de la charge comprennent des moyens de mesure de la tension aux bornes de chaque batterie et des moyens de coupure de l'alimentation de ladite batterie lorsque la tension mesurée à ses bornes devient décroissante.

Pour éviter les surcharges, l'invention utilise donc le fait que, lorsque la batterie est arrivée à pleine charge, la tension à ses bornes décroît après un pic de tension maximale. C'est cette décroissance qui est détectée et qui entraîne la coupure de l'alimentation de charge de la batterie.

Dans un mode de réalisation avantageux, les moyens de commande automatique de l'enclenchement et de l'arrêt de la charge comprennent des moyens de conversion analogique/numérique, avec une périodicité déterminée, de la valeur de la tension mesurée aux bornes de la batterie, ces moyens de conversion comprenant des moyens temporisateurs programmables, des moyens de conversion numérique/analogique de ladite tension convertie sous forme numérique pour constituer ainsi périodiquement une tension analogique de référence, et les moyens de coupure de l'alimentation électrique de la batterie comprennent des moyens de comparaison fournissant un signal électrique de sortie représentatif de la différence entre la valeur de la tension mesurée aux bornes de la batterie et la valeur de ladite tension analogique de référence mesurée précédemment, et des moyens de coupure de l'alimentation de la batterie lorsque ladite différence est négative.

Ainsi, on voit que le principe de contrôle de la tension aux bornes de la batterie est basé sur une comparaison de cette tension à un instant donné, avec la tension à ces mêmes bornes en un instant antérieur au précédent.

Un autre but de l'invention est de pouvoir détecter les batteries défectueuses.

Pour la détection des batteries défectueuses, le chargeur automatique pourra comporter en outre un comparateur dont l'entrée non inverseuse reçoit une tension de référence et son entrée inverseuse une fraction de la tension de la batterie, la sortie dudit comparateur déterminant, par l'intermédiaire d'un circuit astable, le clignotement d'un voyant tant que la tension de la batterie reste inférieure à un seuil de bon fonctionnement déterminé.

La présente invention sera mieux comprise à la lecture de deux modes particuliers de réalisation donnés ci-après à titre d'exemples non limitatifs, en faisant référence aux figures du dessin ci-annexé dans lequel :

- les **figures 1 et 2** donnent le schéma électrique, en deux parties, d'un mode de réalisation des moyens de commande automatique d'enclenchement et d'arrêt du chargement d'une batterie, appartenant à un chargeur selon l'invention ;

- la **figure 3** est une courbe montrant l'évolution de la tension entre les bornes d'une batterie lors de son chargement, en fonction du temps ; et

- les **figures 4 à 6** représentent encore un chargeur conforme à l'invention dans un autre mode de réalisation prévu pour charger de une à huit batteries ou accumulateurs, ce chargeur étant pourvu d'un bloc d'alimentation fournissant la tension de 24V continu, nécessaire à la charge des batteries, ainsi que les tensions auxiliaires ± 12V et + 5V régulées, nécessaires à l'alimentation des dispositifs électroniques des réceptacles de charge.

En particulier :

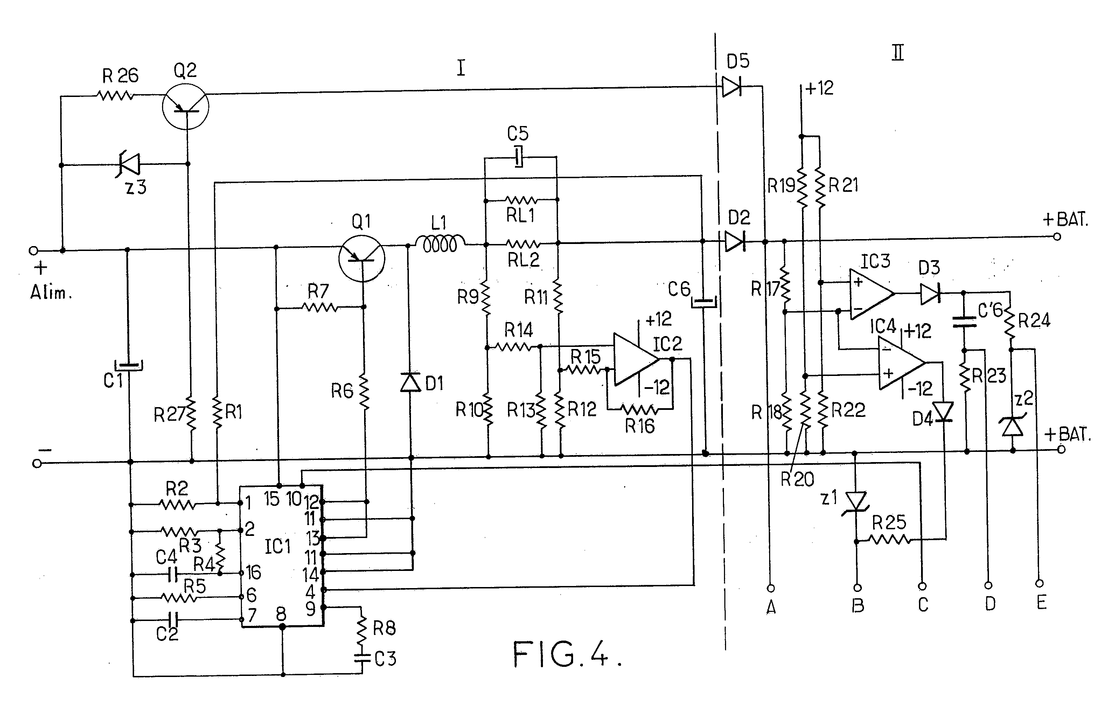

- la figure 4 montre l'unité I comprenant les régulateurs de charge et l'unité II comprenant le dispositif de détection de présence d'une batterie aux bornes du chargeur et le dispositif de détection de batterie défectueuse ;

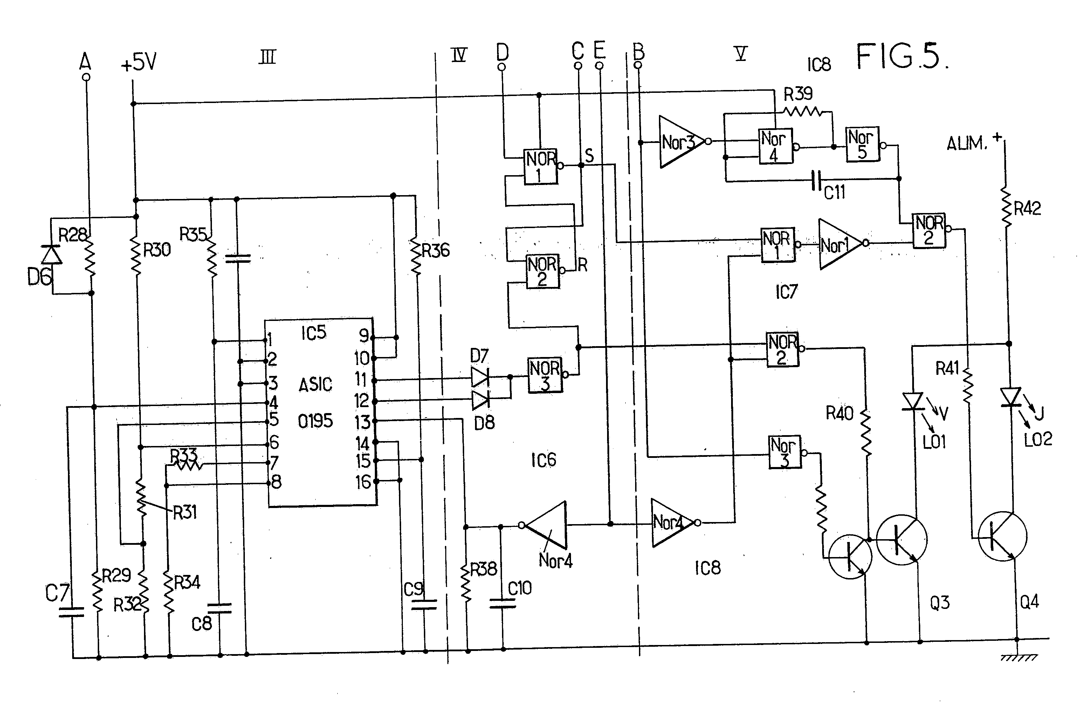

- la figure 5 montre l'unité III comprenant le dispositif d'analyse de la tension de la batterie, l'unité IV comprenant les circuits de commande d'arrêt de la charge et l'unité V comprenant les moyens de signalisation ; et

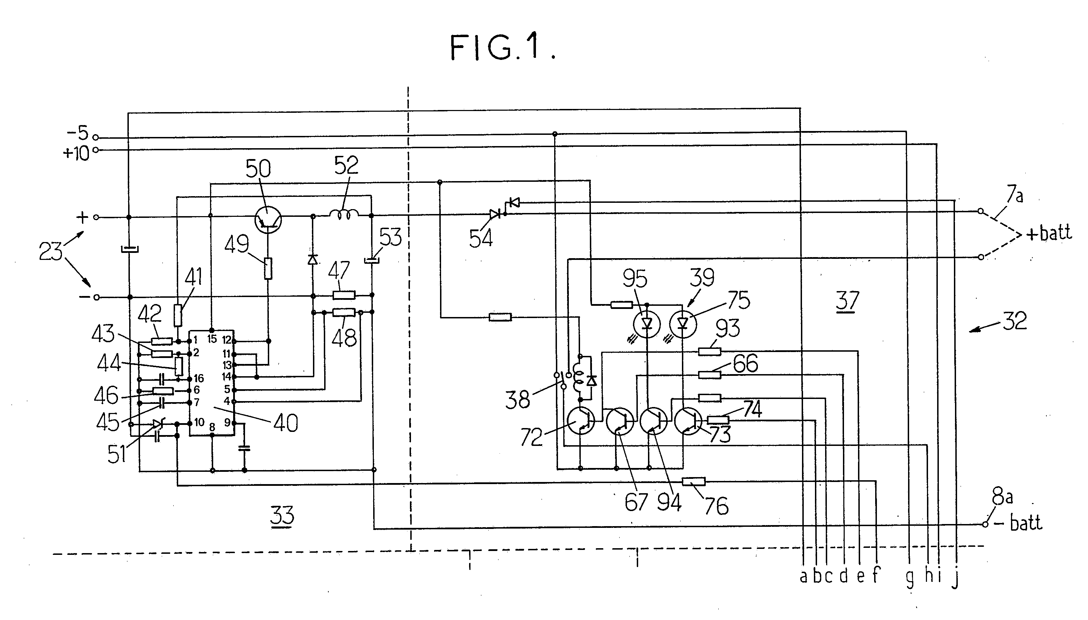

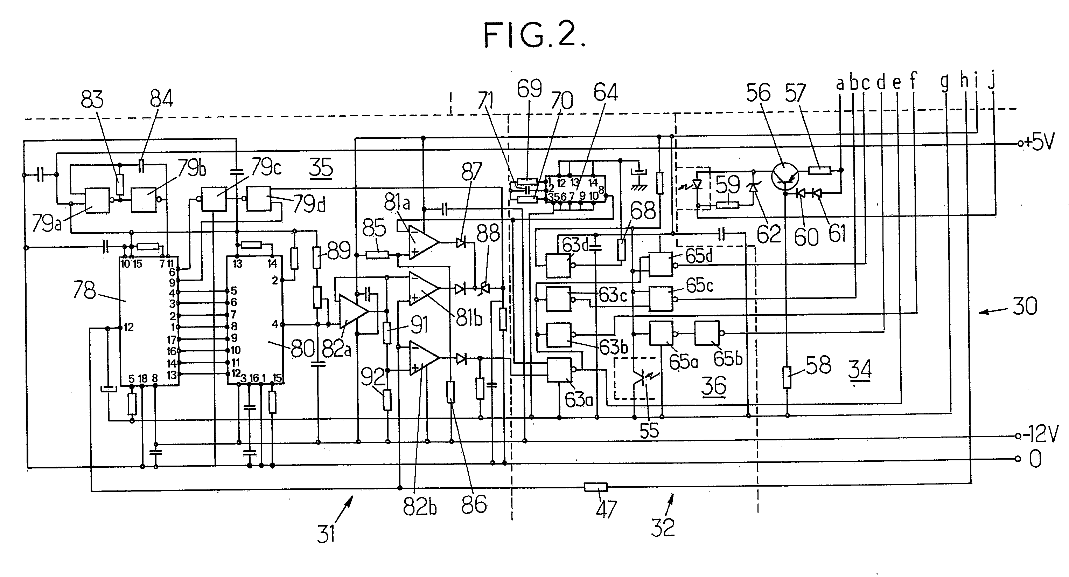

- la figure 6 est le schéma fonctionnel du circuit intégré ASIC O 195 de l'unité III, remplaçant les cinq circuits intégrés de l'unité 35 du mode de réalisation des figures 1 et 2.

Un chargeur conforme à l'invention peut être destiné par exemple au chargement simultané de quatre batteries, et comprendre un bloc d'alimentation commun, alimenté en courant alternatif par le réseau.

Le chargeur peut ainsi comprendre quatre modules de chargement amovibles, tous alimentés par la tension redressée et filtrée fournie par le bloc d'alimentation et groupés dans le même appareil.

Au point de vue mécanique, l'agencement pourra être avantageusement celui qui fait l'objet d'une autre demande de brevet déposée dans ce pays le même jour au nom de la demanderesse.

Chaque module de chargement comporte une carte électronique comprenant des moyens 30 d'enclenchement automatique du chargement lorsque la batterie est placée dans le module, des moyens de mesure analogique 31 de la tension aux bornes de la batterie et des moyens d'arrêt automatique 32 du chargement de ladite batterie lorsque la tension mesurée à ses bornes devient décroissante.

Les figures 1 et 2 donnent le schéma électrique d'une carte électronique d'un module de chargement selon l'invention. La figure 2 est la prolongation de la figure 1, les interfaces des liaisons électriques entre les deux figures étant répertoriées par les lettres a-j.

Sur le schéma électrique des figures 1 et 2 sont représentées cinq unités distinctes, séparées les unes des autres par des traits en pointillés :

- l'unité 33, de type connu, qui constitue le régulateur agencé pour délivrer une intensité constante, nécessaire à la charge de la batterie,

- l'unité 34, également de type connu, qui comprend le dispositif de détection de la présence d'une batterie dans le module de chargement,

- l'unité 35 d'analyse de la tension de la batterie,

- l'unité 36 de commande automatique d'arrêt de la charge et de commande de la signalisation 39, et

- l'unité 37, qui comporte le commutateur d'arrêt 38 de la charge et lesdits moyens de signalisation 39.

L'unité 33 est alimentée en tension redressée et filtrée aux bornes 23, connectées au bloc d'alimentation du chargeur.

L'unité 33 comprend un circuit intégré 40 de commande d'alimentation à découpage, deux résistances 41 et 42, fixant la tension de sortie régulée et deux résistances 43 et 44 constituant le diviseur de tension de référence du circuit intégré 40 et déterminant la fréquence de découpage.

Les bornes n° 5 et n° 4 du circuit intégré 40 sont reliées au groupe de résistances 47, 48 déterminant le courant de charge.

Le signal rectangulaire de sortie est engendré aux bornes de sortie n° 12 et n° 13 du circuit intégré 40 et appliqué via la résistance 49 au transistor de commutation 50.

Un niveau logique, fixé par une diode Zener 51, provenant de l'unité 36, et appliqué à la borne d'entrée n° 10 du circuit intégré 40 détermine le fonctionnement ou l'arrêt de fonctionnement dudit circuit intégré 40 de commande.

La tension issue du transistor 50, lissée par l'inductance 52 et le condensateur 53, est appliquée via la diode 54 à la borne positive 7a d'un réceptacle du chargeur.

L'enclenchement du chargement s'effectue automatiquement dès la mise en place d'une batterie dans ledit réceptacle, grâce aux moyens 30 comprenant une diode de détection appartenant à un photocoupleur 55 en série avec le circuit de charge et d'entretien de la charge de l'unité 34 qui comprend, de façon connue et par exemple, un transistor 56, trois résistances 57, 58, 59, et des diodes 60, 61 et 62. La diode du photocoupleur 55 devient conductrice, ainsi que le transistor dudit photocoupleur, lorsqu'une batterie est mise en place dans ledit réceptacle, ce qui provoque le changement d'état des circuits logiques de l'unité 36.

L'unité 36 comporte :
- un circuit intégré de quatre portes NAND, 63a, 63b, 63c et 63d,
- un circuit intégré temporisateur monostable et programmable 64, - un circuit intégré de quatre portes NOR 65a, 65b, 65c, 65d.

Dès la conduction du transistor du photocoupleur 55, il est appliqué simultanément un niveau bas (ou état 0) :
- à l'entrée de l'inverseur 65a, ce qui force la sortie de 65b à l'état zéro, cet état étant transmis via la résistance 66 à la base du transistor 67, ce qui maintient celui-ci à l'état bloqué ;
- à l'entrée de l'inverseur 63d dont la sortie, à cet instant, portée au niveau haut (ou état 1) permet l'alimentation, par l'intermédiaire d'une résistance 68, du temporisateur 64.

L'état 0 de sortie du temporisateur 64 est appliqué à l'une des entrées de la porte 63a pendant toute la durée de la temporisation fixée par les composants périphériques du temporisateur 64, comprenant par exemple les résistances 69 et 70 et le condensateur 71.

L'état 1 de sortie de la porte 63a provoque simultanément :
- la conduction du transistor 72 et le collage du relais 38 de l'unité 37,
- la conduction du transistor 73 de l'unité 37, commandée, via la résistance 74, par les portes 63c et 65c, ce qui provoque l'allumage de la diode électro-luminescente 75 de signalisation de charge automatique, par exemple de couleur rouge,
- l'application via la résistance 76, d'un état 0 issu de la sortie de la porte 63b, à la borne 10 du circuit intégré 40 de commande de l'alimentation à découpage de l'unité 33, ce qui entraîne le fonctionnement dudit circuit intégré 40 de commande.

Le contact "travail" du relais 38 étant relié à la borne positive 7a du réceptacle précité, la tension de la batterie est de ce fait appliquée, via la résistance 77, à l'entrée de mesure analogique du circuit intégré convertisseur analogique-numérique 78 de l'unité 35. L'unité 35 comprend, en outre :
- un circuit intégré de quatre portes NAND 79a, 79b, 79c, 79d,
- un circuit intégré convertisseur numérique analogique 80,
- deux doubles amplificateurs opérationnels 81a, 81b et 82a, 82b.

Les portes 79a et 79b, la résistance 83 et le condensateur 84 constituent le circuit d'horloge du convertisseur analogique/numérique 78.

De façon plus précise, le circuit intégré 78 comporte :
- une borne d'entrée n° 12 de mesure analogique,
- une borne d'entrée n°6, d'ordre de conversion active à l'état 1,
- une borne de sortie n°9, d'ordre de conversion active à l'état 0, et
- un bus de sortie de données de 8 bits reliés aux entrées du circuit intégré 80.

Le circuit intégré convertisseur numérique/analogique 80 comporte quant à lui et entre autres :
- un bus d'entrée de données de 8 bits, et
- une borne de sortie n°4 analogique.

Comme indiqué précédemment, dès la mise en place de la batterie dans le réceptacle 6, l'ordre de conversion est donné au circuit intégré 78 par le circuit temporisateur monostable 64 de l'unité 36, l'état 0 de sortie du temporisateur 64 étant appliqué à l'entrée inverseuse du comparateur 81a, dont l'entrée non inverseuse est fixée par les résistances 85 et 86, par exemple à + 7,5 V.

Le comparateur 81a transmet alors via les diodes 87 et 88 un état 1 à l'une des entrées de la porte 79d dont l'autre entrée est connectée à la borne de sortie n°9 du circuit intégré 78. Celle-ci étant, à cet instant, au même niveau, c'est-à-dire à l'état 1, l'état de sortie de l'inverseur suiveur 79c est lui aussi également à l'état 1. Il donne donc l'ordre au circuit 78 de convertir la valeur analogique de la tension de la batterie appliquée à l'entrée n°12 dudit circuit intégré 78.

Dès le début de la conversion, le niveau de sortie de la borne 9 du circuit intégré 78 bascule à l'état 0 et l'ordre de conversion est alors supprimé.

L'impulsion d'ordre de conversion est à nouveau appliquée à l'entrée de la porte 79d en fin de conversion du fait du changement d'état de la borne n°9 du circuit 78.

Ainsi la conversion est arrêtée pendant la durée $t$ de temporisation du monostable 64. La valeur de la tension aux bornes de la batterie à un instant $t_0$ est conservée pendant la durée de ladite temporisation, constituant ainsi une valeur de référence, qui sera réactualisée par une nouvelle conversion à l'instant $t_0 + t$.

Le convertisseur numérique analogique 80 convertit le mot de 8 bits issu du circuit 78 en une valeur analogique ainsi mémorisée, qui est donc également de référence, et qui est représentative de la tension, mesurée à l'instant $t_0$ précédent, aux bornes de la batterie. Cette valeur mémorisée est fournie à l'entrée non inverseuse de l'amplificateur suiveur, de gain unité, 82a. Elle est alors appliquée à l'entrée inverseuse du comparateur 81b, qui la compare à la tension de batterie appliquée à son entrée non inverseuse et correspondant à la mesure instantanée de la tension aux bornes de la batterie.

En fin de temporisation du monostable 64, l'état de l'entrée inverseuse du comparateur 81a est porté à + 15V (état 1), sa sortie bascule alors à l'état 0 et le comparateur n'intervient plus dans le fonctionnement du circuit général.

Le niveau de tension de la borne de sortie n°4 du circuit intégré convertisseur 80 appliqué au comparateur 82b est ajusté par des résistances 89, à une valeur légèrement supérieure à la tension de batterie appliquée à l'entrée n°12 du circuit 78 ; de ce fait, l'ordre de conversion transmis par le comparateur 82b n'est obtenu que lorsque la tension de batterie appliquée à sa borne non inverseuse atteint une valeur supérieure à la valeur mémorisée présente à la borne inverseuse du même comparateur.

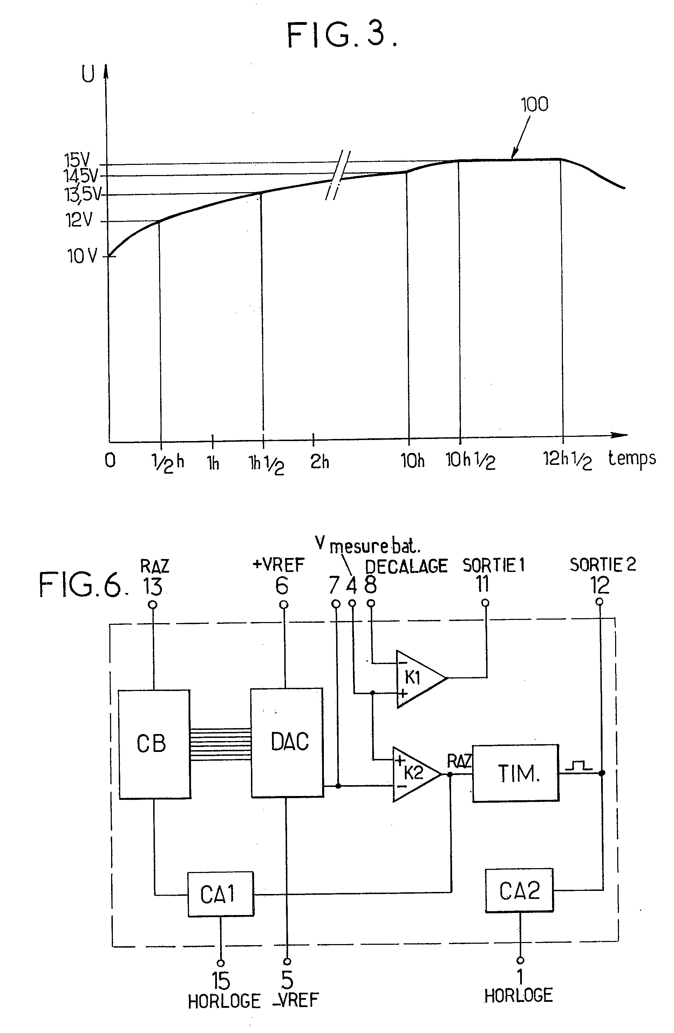

En fin de charge, et comme représenté sur la figure 3, l'évolution de la tension de la batterie est décroissante après un pic de tension maximum 100. L'affaiblissement de la tension de batterie est enregistré par le comparateur 82b sur son entrée non inverseuse qui la compare à la valeur mémorisée issue du circuit 82a et qui est fixée par les résistances 91 et 92. Lorsque la différence est négative, la sortie du circuit 82a bascule à l'état 1 ; cet état, transmis à la porte 63a de l'unité 34, provoque le changement d'état des circuits logiques de commande. Simultanément :
- la sortie de la porte 63b bascule à l'état 1 qui est transmis, via la résistance 76, à la borne n°10 du circuit intégré 40, ce qui bloque le fonctionnement de ce circuit. La charge automatique est donc arrêtée.
- de même, la sortie de la porte 63a bascule à l'état 0 et entraîne le blocage via la résistance 93, du transistor 73 de commande du relais 38. Le relais 38 décolle pour se mettre en position de repos et la borne n°12 du circuit 78 de l'unité 35 est mise à la masse.
- la sortie de la porte 65c bascule à l'état 0 et entraîne le blocage du transistor 73 et l'extinction de la diode électroluminescente 75,
- la sortie de la porte 65d bascule à l'état 1 et provoque la saturation du transistor 94, entraînant l'allumage de la diode électroluminescente 95, par exemple de couleur verte, signalant la fin de charge automatique et le passage en charge d'entretien.

Cet état est permanent tant que la batterie et maintenue dans le réceptacle de charge.

Si on se réfère maintenant au mode de réalisation des figures 4 à 6, le régulateur fixant l'intensité de charge d'entretien comprend le transistor Q2, la diode Zener Z3 et les résistances R26 et R27. L'intensité de la charge d'entretien déterminée par la résistance R26 et la diode Z3 est appliquée via la diode D5 à la batterie BAT (figure 4).

Le régulateur de charge rapide ou semi-rapide comprend le circuit intégré IC1 de commande d'alimentation à découpage et ses composants périphériques, à savoir :
- des résistances R1 et R2 fixant la tension de sortie régulée ;
- des résistances R3, R4 et un condensateur C4 constituant le diviseur de tension de référence du circuit intégré IC1.
- une résistance R8 et un condensateur C3 de réseau de compensation de fréquence ;
- une résistance R5 et un condensateur C2 déterminant la fréquence de découpage du montage.

Le signal rectangulaire des sorties 12 et 13 est appliqué via la résistance R6 au transistor de commutation Q1.

Le dispositif de limitation de l'intensité de charge comprend l'amplificateur différentiel IC2 et les réseaux de résistances R9, R10, R11, R12, R13, R14, R15 et R16 ; la sortie de l'amplificateur IC2 est connectée à la borne 4 du dispositif interne de limitation d'intensité du circuit IC1. L'intensité de charge est ainsi déterminée par les valeurs des résistances RL1 et RL2 montées en parallèle sur un condensateur C5.

A la borne 10 du circuit IC1 est appliqué un niveau logique issu de l'unité IV, déterminant le fonctionnement ou l'arrêt de fonctionnement du montage.

La tension issue du collecteur du transistor Q1 et lissée par la bobine L1 et le condensateur C6 est appliquée via la diode D2 à la borne positive du réceptacle.

Le départ en charge rapide s'effectue automatiquement dès la mise en place de la batterie dans le réceptacle. A cet instant, la sortie du comparateur IC3 de l'unité II change d'état, une impulsion engendrée par le condensateur C'6 et la résistance R29 provoque le basculement à l'état bas de la sortie S de la bascule RS de l'unité IV. Cet état est transmis à la borne 10 du circuit intégré IC1, provoquant le démarrage en charge rapide. Simultanément, un niveau 1 recueilli à la sortie du circuit IC3 de l'unité II via la résistance R24 est appliqué à l'inverseur nord du circuit IC6 de l'unité IV, le niveau bas de la sortie de celui-ci étant appliqué à l'entrée RAZ du circuit intégré IC5 de l'unité III.

L'unité III est essentiellement constituée de ce circuit intégré ASIC IC5, qui comprend (figure 6) :
- un compteur binaire à 8 bits CB ;
- un convertisseur digital/analogique à 8 bits DAC branché sur la sortie de ce compteur ;
- deux comparateurs K1 et K2 ;
- un temporisateur TIM ; et
- deux circuits astables CA1 et CA2.

Les bornes de connexion du circuit intégré ASIC IC5 sont connectées de la manière suivante :

L'entrée 4 de mesure de la tension de la batterie est connectée au point milieu du diviseur constitué des résistances R28, R29 et du condensateur C7. Les entrées d'horloge 1 et 15 sont reliées aux réseaux de type RC : R35, C8 et R36, C9, ces réseaux fixant les fréquences d'horloge des circuits astables internes.

Les bornes 11 et 12 constituent les sorties d'ordre de charge ou d'arrêt de charge de la batterie concernée.

Les bornes 5 et 6 sont reliées aux diviseurs R30, R31 et R32 fixant les tensions de référence - et + du convertisseur DAC.

La tension de sortie analogique du convertisseur DAC est disponible sur la borne 7.

Une tension de décalage fixée par le diviseur R33, R34 est appliquée à la borne 7 du circuit intégré IC5.

Au départ de la charge rapide, l'élévation de tension de la batterie en charge provoque le maintien de la sortie 11 du circuit IC5 à l'état haut, de même que la sortie à l'état haut du comparateur K2 maintient la remise à zéro du temporisateur. La sortie de celui-ci, connectée à la borne 12, est verrouillée à l'état haut.

En charge rapide, l'état haut de la sortie S du circuit intégré IC6 de l'unité IV est appliqué aux opérateurs logiques IC7 et IC8 de l'unité V. Le transistor Q4, rendu conducteur via la résistance R41 par le niveau haut de l'opérateur 2 du circuit intégré IC7 provoque l'allumage de la diode électroluminescente LO2 de signalisation de charge en cours.

De même, la sortie de l'opérateur 2 du circuit intégré IC8 étant à l'état bas, le transistor Q3 reste bloqué et la diode électroluminescente LO1 de signalisation de charge d'entretien est maintenue éteinte.

En fin de charge, la tension de la batterie atteint une valeur de crête 100 suivie d'un affaiblissement caractéristique (figure 3).

La valeur de crête de la tension de la batterie mémorisée à la sortie analogique du convertisseur DAC du circuit intégré IC5 est maintenue aux entrées inverseuses des comparateurs K1 et K2. Les entrées non inverseuses enregistrent l'affaiblissement de la tension de la batterie et provoquent le basculement successif à l'état bas des comparateurs K2 et K1.

Cet état est présent sur la borne 11 du circuit intégré IC5, tandis que l'état haut est maintenu sur la borne 12 pendant la durée de temporisation du temporisateur.

En fin de temporisation, la tension sur la borne 12 bascule à son tour à l'état bas, cet état présent aux entrées de l'opérateur 3 du circuit intégré IC6 entraînant le changement d'état de la bascule RS ; un niveau haut issu de la sortie S de celle-ci est appliqué à la borne 10 du circuit intégré IC3 de l'unité I, provoquant l'arrêt de fonctionnement du régulateur de commande de la charge rapide.

Au même instant, le changement d'état de la sortie S de la bascule RS est appliqué aux opérateurs logiques des circuits intégrés IC7 et IC8, entraînant l'extinction de la diode électroluminescente LO2 et l'allumage de la diode électroluminescente LO1 de signalisation de charge d'entretien.

L'unité II comporte un dispositif de détection de batterie défectueuse ou trop déchargée. Celui-ci comprend un comparateur IC4 dont l'entrée non inverseuse reçoit une tension de référence fixée par les résistances R19 et R20, et son entrée inverseuse une fraction de la tension de batterie déterminée par les résistances R17 et R18. Lorsque celle-ci est inférieure à la valeur de tension de référence, la sortie du comparateur est normalement à l'état haut. Cet état haut, fixé par la résistance R25 et la diode Zener Z1, est transmis aux entrées de l'opérateur 3 du circuit intégré IC8, dont l'état de sortie entraîne le fonctionnement de l'astable constitué des opérateurs 4 et 5 du circuit intégré IC8 et du circuit R39 - C11, entraînant le clignotement de la diode électroluminescente LO2.

Ce clignotement est maintenu tant que la tension de batterie n'a pas atteint une valeur jugée satisfaisante, indiquant à l'utilisateur que la batterie présente, soit un état de décharge trop profond, soit, si le clignotement persiste pendant toute la durée de la charge, que la batterie comporte des éléments en court-circuit.

Dans le cas d'une batterie trop déchargée, sa tension reprend rapidement sa valeur normale et le clignotement d'alarme s'arrête.

Dans le cas d'une batterie comportant des éléments en court-circuit, le clignotement de la diode électroluminescente de signalisation de charge est maintenu en permanence quel que soit le régime de charge appliqué (entretien ou charge).

**Revendications**

1. Chargeur (1) automatique d'au moins une batterie ou accumulateur (2a, 2b, 2c, 2d) amovible, comprenant un bloc (3) d'alimentation en électricité à partir du réseau et au moins un module de chargement de batterie (4a, 4b, 4c, 4d), ledit module comportant des moyens de régulation (33) agencés pour délivrer une intensité constante de charge à la batterie correspondante à charger, des moyens de détection (55) de la présence de ladite batterie placée dans le module et des moyens de commande automatique de l'enclenchement et de l'arrêt de la charge de ladite batterie, caractérisé en ce que lesdits moyens de commande automatique de l'enclenchement et de l'arrêt de la charge comprennent des moyens (36) de mesure analogique de la tension aux bornes de la batterie et des moyens (34, 37) de coupure de l'alimentation en électricité de ladite batterie lorsque la tension mesurée aux bornes de ladite batterie devient décroissante.

2. Chargeur de batterie selon la revendication 1, caractérisé en ce que les moyens de commande automatique de l'enclenchement et de l'arrêt de la charge de la batterie comprennent des moyens (64, 78) de conversion analogique/numérique avec une périodicité déterminée, de la valeur de la tension mesurée aux bornes de ladite batterie, ces moyens de conversion comprenant des moyens temporisateurs programmables (64) et des moyens (80) de conversion numérique/analogique de ladite tension convertie sous forme numérique, pour constituer ainsi périodiquement une tension analogique de référence, et en ce que les moyens (34, 37) de coupure de l'alimentation en électricité de ladite batterie comprennent des moyens de comparaison (81a, 81b, 82a, 82b) fournissant un signal électrique de sortie représentatif de la différence entre la valeur de la tension mesurée aux borne de la batterie et la valeur de ladite tension analogique de référence mesurée précédemment, et des moyens (63a, 38) de coupure de l'alimentation de la batterie lorsque ladite différence est négative.

3. Chargeur de batteries selon la revendication 1 ou 2, caractérisé en ce que les moyens de commande automatique de l'enclenchement et de l'arrêt de la charge de la batterie comprennent un circuit intégré (63d) de commande des moyens temporisateurs programmables (64), un circuit intégré (63a) de commande des moyens de régulation (33) et de mesure de la tension de la batterie, et un circuit intégré (78) convertisseur analogique/numérique, à qui cette mesure est appliquée et qui est agencé pour attaquer un circuit intégré (80) convertisseur numérique/analogique, fournissant la tension analogique de référence.

4. Chargeur de batteries selon la revendication 3, caractérisé en ce que les moyens de commande automatique de l'enclenchement et de l'arrêt de la charge de la batterie comportent un circuit d'horloge du circuit intégré (78) convertisseur analogique/numérique comprenant deux portes NAND (79a et 79b), et un circuit de commande dudit circuit intégré (78) convertisseur analogique/numérique, comprenant un comparateur (81a) et deux portes NAND (79c et 79d).

5. Chargeur de batteries selon l'une quelconque des revendications précédentes, caractérisé en ce qu'il pourra comporter en outre un comparateur (IC4) dont l'entrée non inverseuse reçoit une tension de référence et son entrée inverseuse une fraction de la tension de la batterie, la sortie dudit comparateur déterminant, par l'intermédiaire d'un circuit astable, le clignotement d'un voyant (LO2) tant que la tension de la batterie reste inférieure à un seuil de bon fonctionnement déterminé.

# FIG.1.

EP 0 343 056 A1

FIG.2.

EP 0 343 056 A1

# FIG. 3.

# FIG. 6.

FIG.4.

FIG.5.

EP 0 343 056 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0222381 (SANYO ELECTRIC CO.LTD.) <br> * page 24, ligne 11 - page 27, ligne 18 * <br> * page 34, ligne 1 - page 50, ligne 17; figures 1-10 * | 1 | H02J7/10 |
| Y | | 2-4 | |
| A | | 5 | |
| | --- | | |
| Y | US-A-4742290 (R.C.SUTPHIN ET AL.) <br> * colonne 7, ligne 4 - colonne 9, ligne 8; figures 1-7 * | 2-4 | |
| | --- | | |
| Y | EP-A-0203847 (BLACK & DECKER INC.) <br> * colonne 5, ligne 28 - colonne 8, ligne 15; figures 1-3 * | 1, 2 | |
| | --- | | |
| Y | EP-A-0005841 (BLACK & DECKER INC.) <br> * page 22, ligne 8 - page 32, ligne 39; figures 1-4 * | 1, 2 | |
| | --- | | |
| A | EP-A-0207054 (MATA F.) <br> * revendications 1-8; figures 1-2c * | 1, 5 | DOMAINES TECHNIQUES RECHERCHES (Int. Cl.4) |
| | --- | | |
| A | EP-A-0147241 (ALEXANDER MANUFACTURING CO.) <br> * page 7, ligne 3 - page 13, ligne 13; figures 1, 2 * | 1 | H02J |
| | ----- | | |

Le présent rapport a été établi pour toutes les revendications

| Lieu de la recherche | Date d'achèvement de la recherche | Examinateur |
|---|---|---|
| LA HAYE | 28 JUILLET 1989 | FOURRICHON P.M.L. |

EPO FORM 1503 03.82 (P0402)